# EUROPEAN PATENT APPLICATION

(11) **EP 3 279 498 A1**
(43) Date of publication of application: **07.02.2018**
(21) Application number: 16182220.0
(22) Date of filing: 01.08.2016
(51) Int. Cl.: F16F 9/34, F16F 9/46

(54) **FLUID ADJUSTMENT ASSEMBLY FOR SUSPENSION DEVICE**

(71) Applicant: Kind Shock Hi-Tech Co., Ltd., Tainan City 709 (TW)
(72) Inventor: HSU, Jung Yu, TAINAN CITY 709 (TW)
(74) Representative: Cabinet Chaillot

(57) **Abstract**

A fluid adjustment assembly for a suspension device (70) includes a tube unit (10) and an outer member (20), a first chamber (21) is defined therebetween. The tube unit (10) has multiple communication holes (22) which communicate with the first chamber (21). A check valve (30) having a passage (33) is located in the tube unit (10) and divides the tube unit (10) into a second chamber (31) and a third chamber (32). An engaging member (34) is connected to the passage (33) and has a main hole (341) communicating with the second and third chambers (31, 32). Multiple one-way holes (35) are defined in the tube unit (10) and communicate with the first and third chambers (21, 32). A seal plate (36) is used to seal each of the one-way holes (35). When the pressure in the first chamber (21) reaches a pre-set value, the seal plate (36) open the one-way holes (35) to form sub-paths. A piston unit (50) is linearly movable in the third chamber (32) to change a volume of the third chamber (32).

## Description

### BACKGROUND OF THE INVENTION

### 1. Fields of the invention

The present invention relates to a fluid adjustment assembly, and more particularly, to a fluid adjustment assembly for a suspension device, the fluid adjustment assembly creates a sub-path when a pre-set pressure is reached to increase the volume of fluid in the suspension device.

### 2. Descriptions of Related Art

The conventional suspension device is used to buffer impact so as to protect the users or the mechanism itself. The suspension device used on traffic vehicles, such as cars, motorbikes or bicycles is especially important. The impact transferred from the road to the frame of the vehicles or even to the users has to be properly reduced or buffered.

The bicycle suspension device usually is installed to the front fork, the seat stays or the seat post to reduce the impact to the front wheel, the rear wheel and the seat.

The conventional suspension devices can be operated by mechanical, hydraulic or pneumatic-hydraulic way, wherein the mechanical suspension device uses a damper member which can be a spring to absorb the impact. The hydraulic suspension device has chambers and the fluid flows between chambers to create buffering feature. The pneumatic suspension device has liquid changer and air chamber, the air can be compressed to absorb the impact. Different operation modes can be combined.

The latest suspension device develops a lock-out feature which sets the suspension device to a certain level so that when the bicycle is ridden on a flat road, the suspension device is set to lock-out to save the riders effort. The levels of suspension features can be adjusted according to practical needs. The chambers can be arranged in upright direction or inner-and-outer fashion, such that the paths of the liquid or air are accordingly set to achieve different purposes.

A front fork suspension device known to applicant discloses an inner tube which has a top end inserted into an outer tube, and the top end of the inner tube has a piston with holes. A hollow tube has one end fixed to the outer tube, and the other end has holes of different sizes. The wall of the one end of the hollow tube that has larger diameter has a lower liquid holes communicating with the holes. An adjustment valve is located in the inner tube. A rod extends through the adjustment valve and is connected to the hollow tube. The rod has a passage. A control shaft is located in the hollow tube and has a top cone-shaped head and a bottom cone-shaped head. A flange extends from the mediate portion of the control shaft and is located in the hole that has larger diameter. The top cone-shaped head has a spring mounted thereto and the spring is located between the flange and the end face of the rod. An adjustment member is connected to the outer tube and located corresponding to the bottom cone-shaped head. The adjustment member has a button and an operation member connected to the button. The operation member has a cone-shaped push face which contacts the bottom cone-shaped head.

Another front fork suspension device includes an inner tube and an outer tube, a hollow piston is located in one end of the inner tube. An adjustment tube is located in the outer tube and the other end of the adjustment tube extends through the piston. The adjustment tube has a hollow tube and a control shaft. One end of the hollow tube that is located in the inner tube has a spring, a washer and an adjustment valve connected thereto. The adjustment valve has a lateral hole, and defines the inner tube to have a top chamber and a bottom chamber. A rod has liquid holes extends through the parts mentioned above and is fixed to the end of the hollow tube. The washer is located at the lateral hole. The hollow tube has a bottom hole in the bottom chamber and which communicates with the liquid hole. The other end of the hollow tube extends through the outer tube and is fixed to the outer tube. A control shaft is located in the hollow tube and has a cone-shaped head that is located corresponding to the bottom hole of the hollow tube. A gap is formed between the bottom hole and the cone-shaped head.

Yet another front fork suspension device comprises a top tube and a bottom tube connected to the top tube. A locking device is fixed to the inside of the top tube and located beneath the surface of the hydraulic liquid. The locking device divides the interior of the top tube into a top chamber and a bottom chamber. A valve is installed and has an entrance hole to allow the liquid in the bottom chamber to flow to the top chamber. An adjustment device has a button and a first control shaft, wherein the button is located on the outside of the top end of the top tube so as to drive the first rod to seal or open the control the entrance hole. The first control shaft has an axial hole and at least lateral hole. The axial hole communicates with the entrance hole of the locking device and has a small-diameter portion. The lateral hole communicates with the top chamber. A micro-adjustment device has an adjustment knob, a second control shaft, a spring and a piston, wherein the adjustment knob is located on the outside of the top end of the top tube so as to drive the second control shaft that extends through the axial hole of the first control shaft to move axially up and down. The spring and the piston are located in the axial hole of the first control shaft. The spring pushes the valve to contact the small-diameter portion of the axial hole to seal the entrance hole from being in communication with the lateral hole of the first control shaft.

The first and second disclosures of the prior art each have a button located at the lower portion of the front fork, the button of the first disclosure is operated to drive the control shaft to control the opening of the liquid hole to change the speed of the liquid to achieve the buffering purpose. The second disclosure operates the button to control the control shaft to move linearly to adjust the size of the opening of the liquid hole. These two disclosures can only be function when the suspension devices are in action. The third disclosure has the knob connected to the upper portion of the front fork so as to adjust the size of the opening of the lateral hole to change the speed of the liquid.

However, the conventional suspension devices mentioned above uses a valve located in one chamber, and is cooperated with an adjustment unit to control the speed of the liquid passing through the valve so as to have different level so buffering features. When the speed of the liquid is high, the buffering feature is obvious, but the rider has to tread the bicycle harder. On the contrary, when the speed of the liquid s slows down, the buffering feature is not obvious, and the rider treads the bicycle easier.

When the road condition is worse and the suspension device has to work frequently, the conventional suspension device cannot quickly response the impact, that is to say, the previous stroke of the suspension action has not yet been completed, another impact reaches. The speed of the liquid is too low for responding the continuous impacts. Besides, when a large impact is transferred to the suspension device, because the speed of the liquid is too slow, the change of the pressure in the chamber cannot meet the requirement so that the parts can be easily damaged.

The present invention intends to provide a fluid adjustment assembly for a suspension device to use a check valve to create another sub-path so as to quickly bring the fluid back to deal with the flowing impact.

### SUMMARY OF THE INVENTION

The present invention relates to a fluid adjustment assembly for a suspension device, and comprises a tube unit, and an outer member is mounted to outside of the tube unit so as to define a first chamber therebetwen. At least one communication hole is defined in the tube unit and communicates with the first chamber. A check valve is located in the tube unit and divides the interior of the tube unit into a second chamber and a third chamber. A passage is defined through the check valve and communicates with the second and third chambers. An engaging member is connected to the passage and has a main hole defined therethrough which communicates with the second and third chambers. At least one one-way hole is defined through the wall of the tube unit and located close to the engaging member. The at least one one-way hole communicates with the first and third chambers. A seal plate is located on one side of the at least one one-way hole to seal the at least one one-way hole. A piston unit is linearly movable in the third chamber to change the volume of the third chamber. When the pressure in the first chamber reaches a pre-set value, the seal plate is pushed away to open the at least one one-way hole so as to form a sub-path.

The sub-path allows the fluid to quickly flow back when the impact is transferred to the suspension device, and the suspension device is on the way to return to its original status, the fluid flows quickly to shorten the response time so that the suspension device can response continuous impacts to provide better suspension features.

The check valve is set to only react to create the sub-path when the scale of the impact meets the pre-set value. Therefore, the suspension device works properly according to the scales of the impacts so as to save energy of the riders.

The fluid adjustment assembly for a suspension device of the present invention is easily manufactured at lower cost, and the parts of the present invention are properly protected when a sudden and severe impact is transferred to the suspension device.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the fluid adjustment assembly of the present invention and a suspension device;
Fig. 2 is an exploded view of the fluid adjustment assembly of the present invention;
Fig. 3 is a cross sectional view of the fluid adjustment assembly of the present invention;

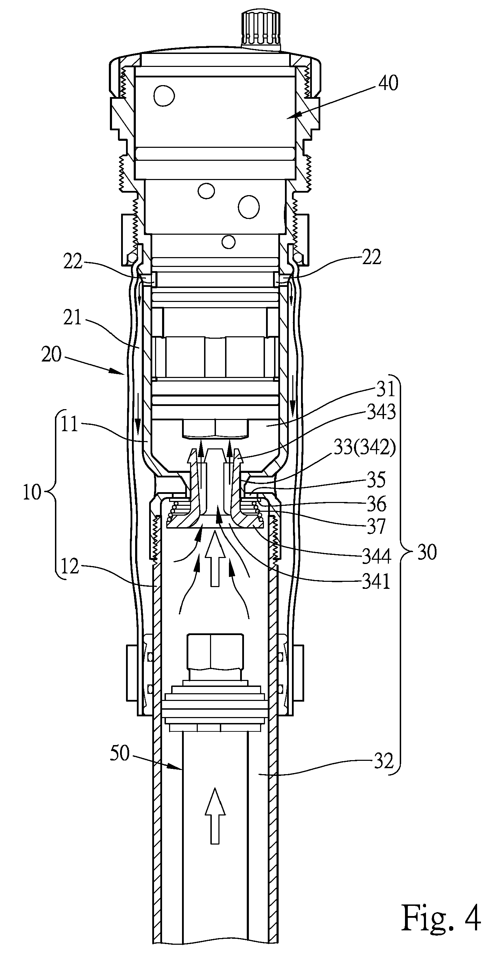

Fig. 4 is a cross sectional view to show that an impact is applied to the fluid adjustment assembly of the present invention;
Fig. 5 is a cross sectional view to show that the piston unit of the fluid adjustment assembly of the present invention returns back;
Fig. 6 is a perspective view to show the second embodiment of the fluid adjustment assembly of the present invention;
Fig. 7 is an exploded view to show the second embodiment of the fluid adjustment assembly of the present invention;
Fig. 8 is a cross sectional view of the second embodiment of the fluid adjustment assembly of the present invention, and
Fig. 9 is a perspective view to show the third embodiment of the fluid adjustment assembly of the present invention.

### DETAILED DESCRIPTION OF THE PREFERRED EMBODIMENT

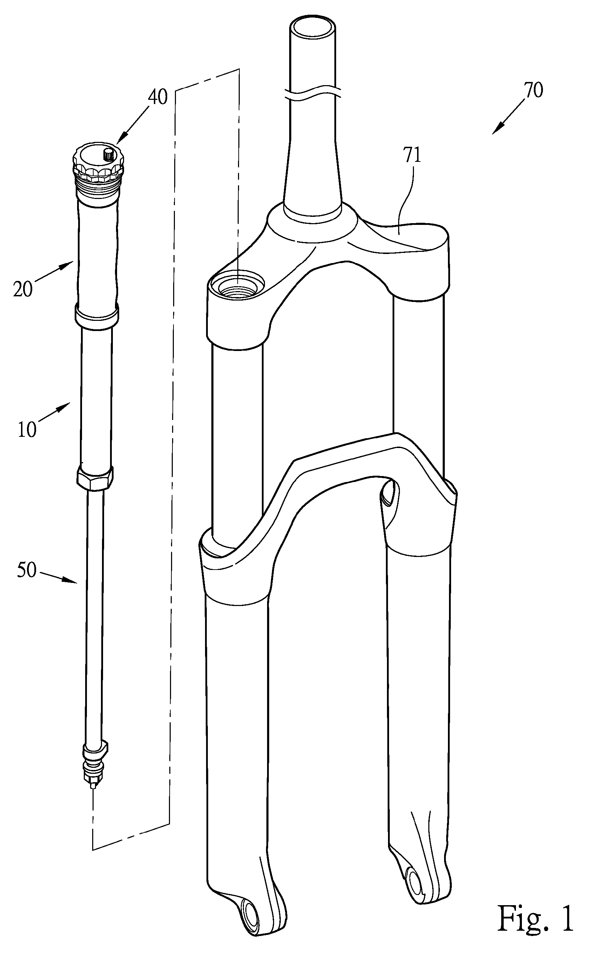

Referring to Figs. 1 to 3, the fluid adjustment assembly of the present invention is used in a suspension device 70 which is a bicycle suspension device. The fluid adjustment assembly of the present invention comprises a tube unit 10, and an outer member 20 is mounted to outside of the tube unit 10 so as to define a first chamber 21 between the tube unit 10 and the outer member 20. A check valve 30, an adjustment valve 40 and a piston unit 50 are located in the tube unit 10. The tube unit 10 has a top tube 11 and a bottom tube 12 which is connected to the top tube 11. The outer member 20 is a pouch. Multiple communication holes 22 are defined in the tube unit 10 and communicate with the first chamber 21.

The check valve 30 is located in the tube unit 10 and divides the interior of the tube unit 10 into a second chamber 31 and a third chamber 32. A passage 33 is defined through the check valve 30 and communicates with the second and third chambers 31, 32. An engaging member 34 is connected to the passage 33 and has a main hole 341 defined therethrough which communicates with the second and third chambers 31, 32. The engaging member 34 is linearly movable in the passage 33. At least one one-way hole 35 is defined through the wall of the tube unit 10 and located close to the engaging member 34. The at least one one-way hole 35 communicates with the first and third chambers 21, 32. The engaging member 34 has a protrusion 342 which extends through the passage 33, and the protrusion 342 has an engaging portion 343 on the distal end thereof. The engaging portion 343 is engaged with one end of the passage 33. A seal plate 36 is mounted to the protrusion 342 and located on one side of the at least one one-way hole 35 to seal the at least one one-way hole 35. When a pressure in the first chamber 21 reaches a pre-set value, the seal plate 36 is pushed away to open the at least one one-way hole 35 so as to form a sub-path. The engaging member 34 has a flange 344 extending radially therefrom. The protrusion 342 extends from the center of the engaging member 34. A resilient member 37 is biased between the flange 344 and the seal plate 36 to provide a force to the seal plate 36.

The adjustment valve 40 is located in the second chamber 31, such that the fluid in the first and second chambers 21, 31 flows through the adjustment valve 40.

The piston unit 50 is linearly movable in the third chamber 32 to change the volume of the third chamber 32.

When assembling the fluid adjustment assembly, the adjustment valve 40 and the piston unit 50 are respectively prepared, and the communication holes 22 and the one-way holes 35 are respectively formed in the tube unit 10. The resilient member 37 and the seal plate 36 are respectively connected to the engaging member 34 and the protrusion 342, wherein the engaging portion 343 is engaged with the passage 33. The seal plate 36 is biased by the resilient member 37 to seal the one-way holes 35. The adjustment valve 40 is located in the second chamber 31, and the bottom tube 12 is connected to the top tube 11. The outer member 20 is mounted to the tube unit 10. The piston unit 50 is inserted into the bottom tube 12 and reaches the third chamber 32. Hydraulic liquid is filled in the second and third chambers 31, 32.

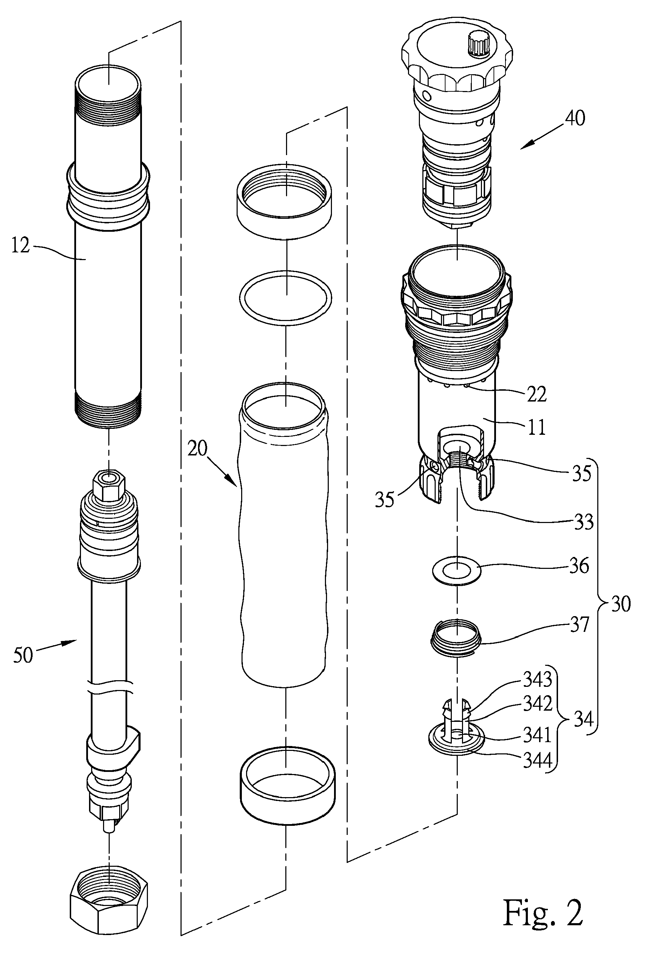

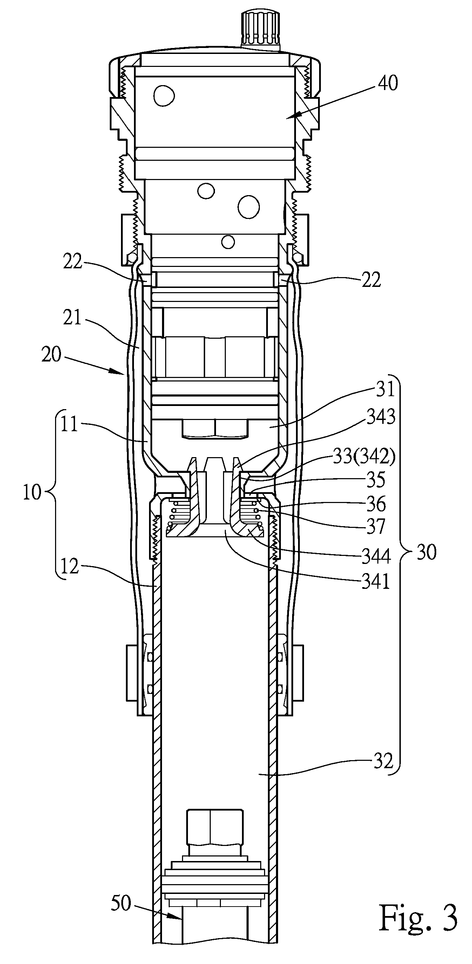

As shown in Figs. 2 and 3, when the present invention is applied by an impact which first applies to the exposed portion of the piston unit 50, the piston unit 50 linearly moves in the third chamber 32 to reduce the volume of the third chamber 32. The liquid in the third chamber 32 flows into the second chamber 31 via the main hole 341. The engaging member 34 also linearly moves toward the second chamber 31, the fluid entered into the second chamber 31 flows to the first chamber 21 via the adjustment of the adjustment valve 40 and the communication holes 22. The higher of the scale of the impact applies, the more that the volume of the third chamber 32 is compressed, and the more volume of the liquid flows into the first chamber 21.

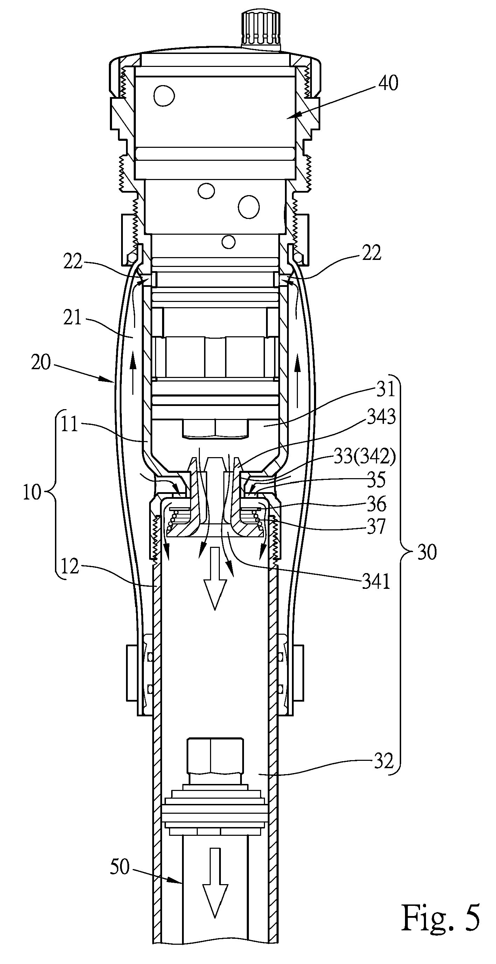

As shown in Fig. 5, as the present invention bounces back, and the impact to the piston unit 50 releases, the pressure of the liquid in the first, second and third chambers 21, 31, 32 is higher than that of the atmosphere. The liquid flows through two paths, the first path is from the first chamber 21, the communication holes 22, the adjustment valve 40, the second chamber 31, the main hole 341 and to the third chamber 32. In the meanwhile, the engaging member 34 is simultaneously moved toward the third chamber 32. The liquid that flows to the third chamber 32 pushes the piston unit 50 outward so that the piston unit 50 returns to its original position. The second path is the sub-path, because the pressure of the liquid in the first chamber 21 is high, so that a portion of the liquid in the first chamber 21 flows through the one-way holes 35 and pushes the seal plate 36 away to open the one-way holes 35, so that the liquid enters into the third chamber 32 so as to return the piston unit 50.

The sub-path can be set to activate when the pressure of the liquid in the first chamber 21 reaches a pre-set value, therefore, the liquid in the first chamber 21 directly and quickly enters into the third chamber 32. In this embodiment, the pre-set value for activating the sub-path is the resilient force of the resilient member 37. When the pressure of the liquid in the first chamber 21 is larger than the pre-set value which is the resilient force of the resilient member 37, the seal plate 36 is pushed away to open the one-way holes 35 so that the liquid in the first chamber 21 directly and quickly enters into the third chamber 32. When the pressure of the liquid in the first chamber 21 is smaller than the pre-set value which is the resilient force of the resilient member 37, the seal plate 36 seals the one-way holes 35. In this moment, there could be some liquid remained in the first chamber 21, the remained liquid flows through the communication holes 22, the adjustment valve 40 and enters into the second chamber 31, and then flows through the main hole 341 and back to the third chamber 32.

The engaging member 34 is floatable in the passage 33, when the impact pushes the piston unit 50 to compress the volume of the third chamber 32, because the pressure in the third chamber 32 is high so that the engaging member 34 is pushed toward the second chamber 31. The distance between the engaging member 34 and the wall of the one-way holes 35 so that the resilient member 37 is under compressed which has larger resilient force which pushes the seal plate 36 to seal the one-way holes 35. Therefore, the force required to push the seal plate 36 by the pressure in the first chamber 21 will be larger than the pre-set value, so that the possible negative effect to the buffering feature by the liquid flowing back due to the impact is reduced.

The second and third chambers 31, 32 are arranged in upright direction in the tube unit 10, the first chamber 21 is located outside of the second and third chambers 31, 32. Beside the adjustment valve 40 to provide buffering feature, the tube unit 10 has the check valve 30, and this arrangement have the advantages as follows.

When the piston unit 50 moves back after the impact, the liquid in the first chamber 21 flows through the main hole and the sub-path which is activated by the check valve 30. Therefore, the liquid in the first chamber 21 directly and quickly enters into the third chamber 32 so as to shorten the response time of the suspension device.

The sub-path of the present invention can be opened when the piston unit 50 bounces back, so that the time required to return the piston unit 50 is shortened. Therefore, the suspension device can respond to continuous impacts properly and quickly.

By setting the pre-set value of the resilient member 37, the pressure in the first chamber 21 has to be larger than the pre-set value to open the sub-path via the one-way holes 35 so that the pressure due to the severe impact can be quickly released.

The structure of the suspension device is simple and easily manufactured at lower cost.

The pressure within the suspension device can be quickly released when severe impacts applied to the suspension device of the present invention so that the parts of the suspension device of the present invention can be protected from being damaged by high pressure.

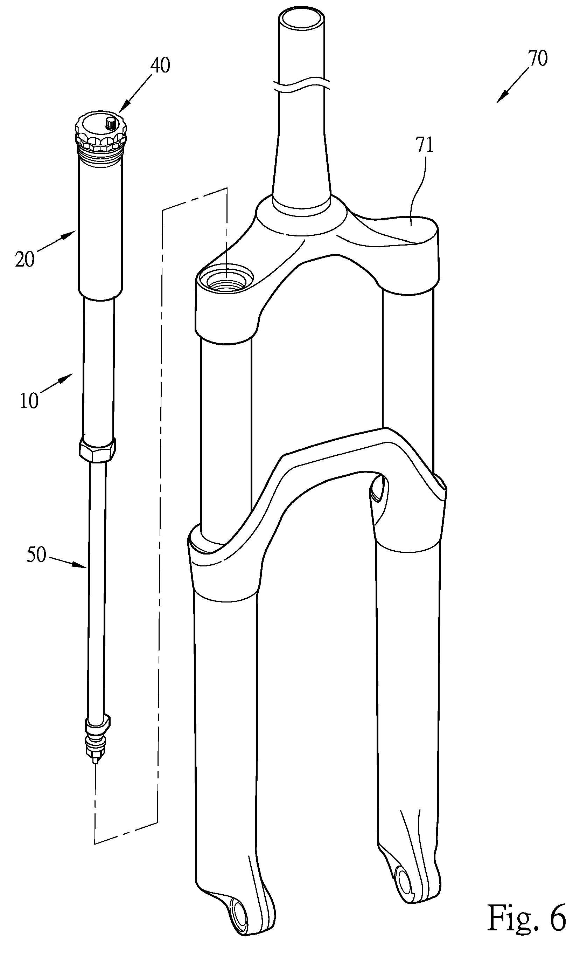

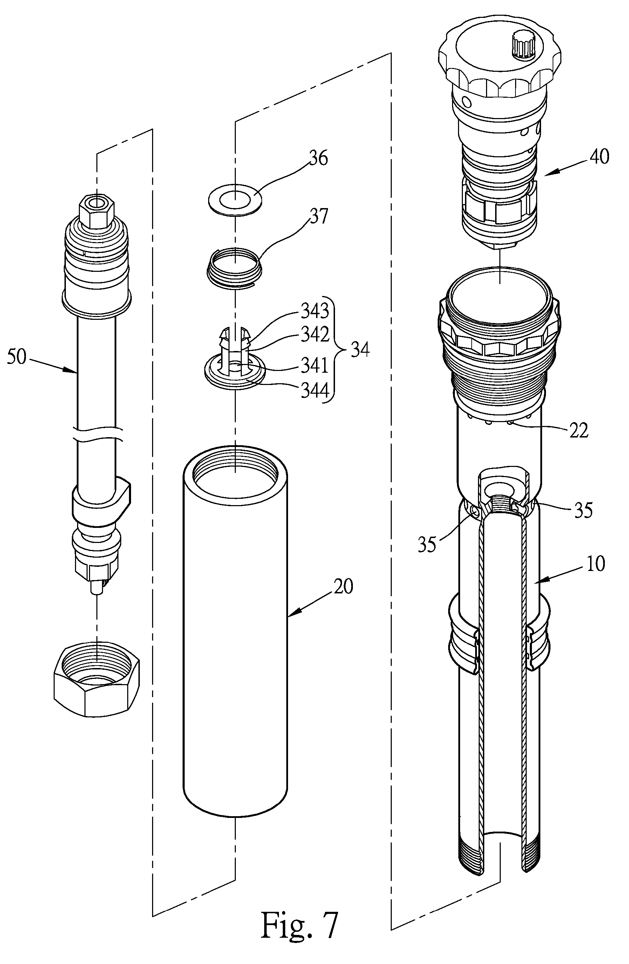

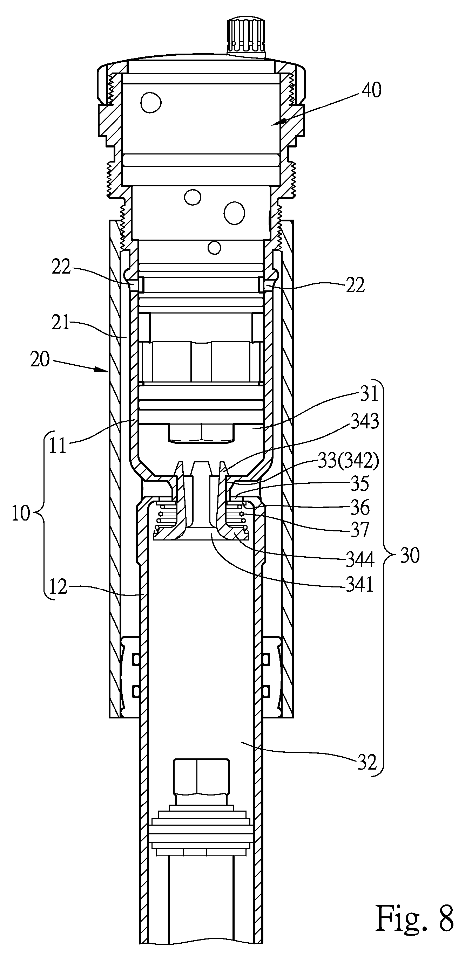

As shown in Figs. 6 to 8, the second embodiment of the present invention is disclosed wherein the differences from the first embodiment are that the outer member 20 is a tubular member, and the tube unit 10 is a one-piece structure. The check valve 30 is located at the pre-set position in the tube unit 10.

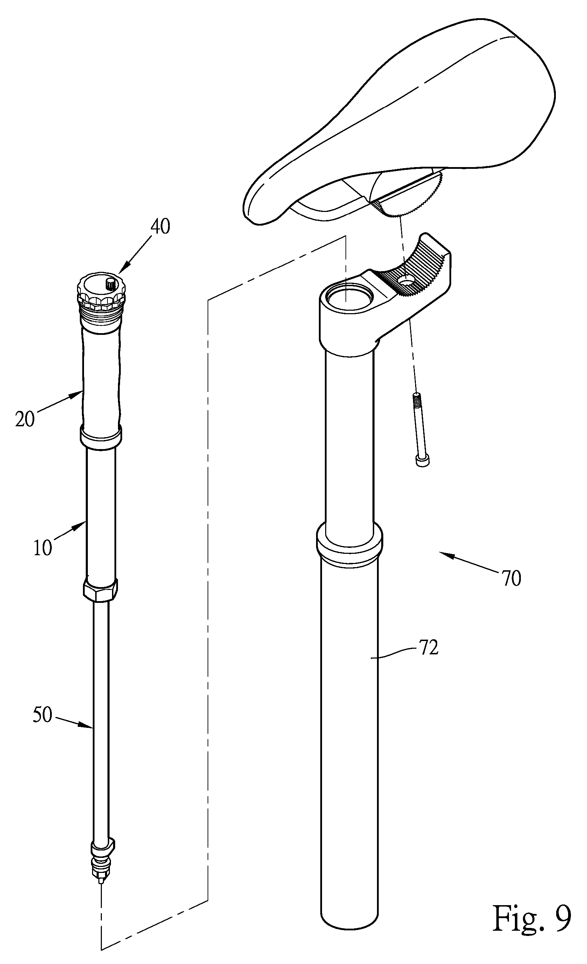

As shown in Fig. 9, the third embodiment of the present invention is disclosed and is used in the bicycle seat post 72, wherein bicycle seat post 72 is the suspension device 70 mentioned above and comprises the tube unit 10 and the outer member 20. The check valve 30 is located at the pre-set position in the tube unit 10. The adjustment valve 40 is located in the second chamber 31 at the upper portion in the tube unit 10. The piston unit 50 is connected to the lower portion of the tube unit 10.

It is noted that the suspension device can be used on bicycle front fork, seat tube, or suspension equipment of motorbikes or suspension equipment of machinery.

While we have shown and described the embodiment in accordance with the present invention, it should be clear to those skilled in the art that further embodiments may be made without departing from the scope of the present invention.

## Claims

1. A fluid adjustment assembly for a suspension device, comprising:
a tube unit;
an outer member mounted to outside of the tube unit, a first chamber defined between the tube unit and the outer member, at least one communication hole defined in the tube unit and communicating with the first chamber;
a check valve located in the tube unit and dividing an interior of the tube unit into a second chamber and a third chamber, a passage defined through the check valve and communicating with the second and third chambers, an engaging member connected to the passage and having a main hole defined therethrough which communicates with the second and third chambers, at least one one-way hole defined through a wall of the tube unit and located close to the engaging member, the at least one one-way hole communicating with the first and third chambers, a seal plate located on one side of the at least one one-way hole to seal the at least one one-way hole, when a pressure in the first chamber reaches a pre-set value, the seal plate is pushed away to open the at least one one-way hole so as to form a sub-path, and
a piston unit linearly movable in the third chamber to change a volume of the third chamber.

2. The fluid adjustment assembly as claimed in claim 1, wherein an adjustment valve is located in the second chamber, fluid in the first and second chambers flows through the adjustment valve.

3. The fluid adjustment assembly as claimed in claim 1, wherein the engaging member is linearly movable in the passage.

4. The fluid adjustment assembly as claimed in claim 1, wherein the engaging member has a protrusion which extends through the passage, the protrusion has an engaging portion on a distal end thereof, the engaging portion is engaged with an end of the passage.

5. The fluid adjustment assembly as claimed in claim 1, wherein the engaging member has a flange extending radially therefrom, a protrusion extends from a center of the engaging member, the seal plate is mounted to the protrusion to seal the at least one one-way hole, a resilient member is biased between the flange and the seal plate to provide a force to the seal plate.

6. The fluid adjustment assembly as claimed in claim 1, wherein the tube unit has a top tube and a bottom tube which is connected to the top tube.

7. The fluid adjustment assembly as claimed in claim 1, wherein the outer member is a pouch.

8. The fluid adjustment assembly as claimed in claim 1, wherein the outer member is a tubular member.

9. The fluid adjustment assembly as claimed in claim 1, wherein the suspension device is a motorbike suspension device.

10. The fluid adjustment assembly as claimed in claim 1, wherein the suspension device is a bicycle suspension device.
